# EUROPEAN PATENT APPLICATION

(11) **EP 4 679 701 A1**
(43) Date of publication of application: **14.01.2026**
(21) Application number: 23926905.3
(22) Date of filing: 25.04.2023
(51) Int. Cl.: H02M 7/219, H02M 7/217, H02M 1/42, H02M 1/32, H02J 7/02, B60L 53/00, B60L 1/00

(54) **SINGLE-STAGE THREE-PORT MAGNETIC INTEGRATED TOPOLOGY, AND VEHICLE-MOUNTED CHARGER AND CONTROL METHOD THEREFOR**

(30) Priority: 10.03.2023 CN 202310248243
(71) Applicant: Sungrow Power Supply Co., Ltd., Hefei, Anhui 230088 (CN)
(72) Inventor: WANG, Tengfei, Hefei, Anhui 230088 (CN); ZHUANG, Jiacai, Hefei, Anhui 230088 (CN); WANG, Hao, Hefei, Anhui 230088 (CN); XU, Jiangtao, Hefei, Anhui 230088 (CN); REN, Tianyi, Hefei, Anhui 230088 (CN)
(74) Representative: Epping - Hermann - Fischer
(86) International application number: PCT/CN2023/090541
(87) International publication number: WO 2024/187553

(57) **Abstract**

Provided in the present application are a single-stage three-port magnetic integrated topology, and a vehicle-mounted charger and a control method therefor. In the single-stage three-port magnetic integrated topology, on the basis of implementing voltage polarity conversion processing on an alternating-current side of the single--stage three-port magnetic integrated topology, an alternating-current-side conversion circuit can replace an additional power factor correction (PFC) rectification circuit in the prior art by using a matrix conversion structure, so as to implement a PFC function, such that the PFC rectification circuit in the prior art, a corresponding PFC inductor, and a large-capacitance electrolytic capacitor between positive and negative electrodes of an intermediate bus in a subsequent stage can be omitted, thereby reducing the number of devices and improving the power density. Moreover, compared with the prior art, a single-stage conversion structure in which a PFC rectification circuit has been omitted reduces one stage of power conversion, such that conversion efficiency can be improved, and a control scheme can be simplified. Moreover, by means of a low-impedance design on a high-voltage side, a high-voltage-side conversion circuit can be control to implement transformer port voltage clamping, thereby implementing port power decoupling, and reducing control complexity.

## Description

The present application claims priority to Chinese Patent Application No. 202310248243.6, titled "SINGLE-STAGE THREE-PORT MAGNETIC INTEGRATED TOPOLOGY, AND VEHICLE-MOUNTED CHARGER AND CONTROL METHOD THEREFOR", filed on March 10, 2023 with the China National Intellectual Property Administration, which is incorporated herein by reference in its entirety.

### FIELD

The present disclosure relates to the technical field of power electronics, and in particular, to a single-stage three-port magnetic integrated topology, and a vehicle-mounted charger and a control method therefor.

### BACKGROUND

With the rapid development of new energy vehicles, the market share of electric vehicles is continuously increasing. At present, in the field of passenger vehicles, a vehicle-mounted charger is an important part of an electric vehicle, which has a highly integrated development trend. In the conventional magnetic integration technology, the outputs with two voltage levels supplying to high-voltage batteries, low-voltage batteries and low-voltage electrical devices are integrated together, and a magnetic integrated topology is formed by means of a front-stage PFC (Power Factor Correction) rectification circuit and a rear-stage three-port, to significantly improve the utilization rate and power density of devices.

However, this solution adopts a two-stage cascaded structure, which has the disadvantages of multitude of components, low efficiency and complex control.

### SUMMARY

Embodiments of the present disclosure provides a single-stage three-port magnetic integrated topology, and a vehicle-mounted charger and a control method therefor, to reduce components, improve the conversion efficiency, and simplify the control solution.

In order to achieve the foregoing objective, the following technical solutions are provided according to the present disclosure.

In a first aspect, a single-stage three-port magnetic integrated topology is provided in embodiments of the present disclosure. The single-stage three-port magnetic integrated topology includes a transformer, an AC side conversion circuit, a high-voltage side conversion circuit and a low-voltage side conversion circuit, wherein
one side of the AC side conversion circuit serves as an AC side of the single-stage three-port magnetic integrated topology;
the other side of the AC side conversion circuit is connected with a primary winding of the transformer;
an AC side of the high-voltage side conversion circuit is connected with a secondary winding of the transformer;
a DC side of the high-voltage side conversion circuit serves as a high-voltage DC side of the single-stage three-port magnetic integrated topology;
an AC side of the low-voltage side conversion circuit is connected with another secondary winding of the transformer;
a DC side of the low-voltage side conversion circuit serves as a low-voltage DC side of the single-stage three-port magnetic integrated topology; and
the AC side conversion circuit is a matrix conversion structure, to perform voltage polarity conversion and power factor correction for the AC side of the single-stage three-port magnetic integrated topology.

Optionally, the matrix conversion structure is a three-phase structure, a full bridge structure, or a half bridge structure.

Optionally, a controlled half bridge arm in the AC side conversion circuit includes two bidirectional switches connected in series; and each of the two bidirectional switches includes two switching transistors connected in series in reverse;
when the matrix conversion structure is the three-phase structure or the full bridge structure, a corresponding filter capacitor is provided between each two AC phases of the single-stage three-port magnetic integrated topology; and
when the matrix conversion structure is the half bridge structure, the AC side conversion circuit further includes two filter capacitors connected in series, a series connection point is connected with the primary winding, and two ends of the two filtering capacitors connected in series are connected in parallel with the half bridge arm to the AC side of the single-stage three-port magnetic integrated topology.

Optionally, the high-voltage-side conversion circuit is a full bridge circuit or a half bridge circuit.

Optionally, the low-voltage-side conversion circuit is a full bridge circuit, or a full-wave rectifier circuit and a buck circuit connected in a cascade.

Optionally, the single-stage three-port magnetic integrated topology further includes a first impedance, a second impedance and a third impedance, wherein,
the first impedance and the primary winding are connected in series to a corresponding side of the AC side conversion circuit;
the second impedance and a corresponding secondary winding are connected in series to the AC side of the high-voltage-side conversion circuit; and
the third impedance and a corresponding secondary winding are connected in series to the AC side of the low-voltage side conversion circuit.

Optionally, at a switching frequency of the single-stage three-port magnetic integrated topology, an impedance value of the second impedance is less than each of an impedance value of the first impedance and an impedance value of the third impedance, a difference between the impedance value of the first impedance and the impedance value of the second impedance is greater than a preset threshold, and/or a difference between the impedance value of the third impedance and the impedance value of the second impedance is greater than the preset threshold.

Optionally, the impedance value of the first impedance is zero, or the first impedance is at least one of an inductor and a capacitor;
the impedance value of the second impedance is zero, or the second impedance is at least one of the inductor and capacitor; and
the impedance value of the third impedance is zero, or the third impedance is at least one of the inductors and capacitors.

Optionally, the impedance value of the second impedance is zero, or the second impedance is a capacitor with a capacity greater than a preset capacity.

Optionally, inductors of the first impedance and the third impedance are either single inductors, or integrated inductors or leakage inductors of the transformer.

In a second aspect, a vehicle-mounted charger is provided in embodiments of the present disclosure. The vehicle-mounted charger includes a controller, and a single-stage three-port magnetic integrated topology according to any one of the first aspect above;
wherein the single-stage three-port magnetic integrated topology is controlled by the controller.

In a third aspect, a control method for a vehicle-mounted charger is provided in embodiments of the present disclosure. The control method is applied to the controller of the vehicle-mounted charger according to the second aspect above, and the control method includes:
obtaining a detection parameter of the single-stage three-port magnetic integrated topology in the vehicle-mounted charger, and determining a power transmission direction required by the single-stage three-port magnetic integrated topology;
determining, based on the detection parameter and the power transmission direction, a control parameter of the single-stage three-port magnetic integrated topology, wherein the control parameter includes an external phase shift angle and a switching frequency; and
generating and outputting, based on the control parameter, a driving signal of each switching transistor in the single-stage three-port magnetic integrated topology.

Optionally, the external phase shift angle includes the followings in the single-stage three-port magnetic integrated topology:
a first angle phase difference between the AC side conversion circuit and the high-voltage side conversion circuit in a driving signal;
a second angle phase difference between the AC side conversion circuit and the low-voltage side conversion circuit in the driving signal; and
a third angle phase difference between the high-voltage side conversion circuit and the low-voltage side conversion circuit in the driving signal.

Optionally, when a power is transmitted from the AC side of the single-stage three-port magnetic integrated topology to the high-voltage DC side of the single-stage three-port magnetic integrated topology and the low-voltage DC side of the single-stage three-port magnetic integrated topology, each of the first angle phase difference and the second angle phase difference is greater than zero;
when the power is transmitted from the high-voltage DC side of the single-stage three-port magnetic integrated topology to the low-voltage DC side of the single-stage three-port magnetic integrated topology, the third angle phase difference is greater than zero and a driving signal of the AC side matrix conversion circuit is turned off;
when the power is transmitted from the high-voltage DC side of the single-stage three-port magnetic integrated topology to the AC side of the single-stage three-port magnetic integrated topology and the low-voltage DC side of the single-stage three-port magnetic integrated topology, the first angle phase difference is less than zero and the third angle phase difference is greater than zero; and
when the power is transmitted from the low-voltage DC side of the single-stage three-port magnetic integrated topology to the high-voltage DC side of the single-stage three-port magnetic integrated topology, the third angle phase difference is less than zero and the driving signal of the AC side matrix conversion circuit is turned off.

Optionally, when the low-voltage side conversion circuit in the single-stage three-port magnetic integrated topology is a full bridge circuit, the control parameter further includes an internal phase shift angle of the low-voltage side conversion circuit.

Optionally, the high-voltage side conversion circuit is provided without the internal phase shift angle.

Optionally, for each half bridge arm of the AC side conversion circuit in the single-stage three-port magnetic integrated topology,
an anode of a freewheeling diode is directed towards a switching transistor at a high-voltage terminal of the AC side of the single-stage three-port magnetic integrated topology, and a corresponding driving signal is a constant signal; and
an anode of the freewheeling diode is directed towards a switching transistor at a low-voltage terminal of the alternating-current side of the single-stage three-port magnetic integrated topology, and a corresponding driving signal is a complementary high-frequency on-off signal.

In the single-stage three-port magnetic integrated topology according to embodiments of the present disclosure, the AC side conversion circuit can replace the additional PFC rectification circuit in conventional technology to achieve the power factor correction function using a matrix conversion structure on the basis of implementing voltage polarity conversion processing on the AC side of the single-stage three-port magnetic integrated topology. Therefore, the PFC rectification circuit, a corresponding PFC inductor, and a large-capacitance electrolytic capacitor between positive and negative electrodes of an intermediate bus in the rear stage can be omitted, thereby reducing components and improving the power density. Furthermore, compared to conventional technology, the single-stage conversion structure, with the omission of the PFC rectification circuit, reduces one stage of power conversion, thereby improving the conversion efficiency and simplifying the control solution.

### BRIEF DESCRIPTION OF THE DRAWINGS

In order to more clearly illustrate technical solutions in embodiments of the present disclosure or in conventional technology, the drawings to be used in the description of the embodiments or conventional technology are briefly described below. Apparently, the drawings in the following description show only some embodiments of the present disclosure, and other drawings may be obtained by those skilled in the art from the drawings without any creative work.
FIG. 1 is a structural diagram of a single-stage three-port magnetic integrated topology according to an embodiment of the present disclosure.
FIG. 2 is a structural diagram of an AC side conversion circuit in the single-stage three-port magnetic integrated topology according to an embodiment of the present disclosure.
FIG. 3 is a structural diagram of an AC side conversion circuit in the single-stage three-port magnetic integrated topology according to another embodiment of the present disclosure.
FIG. 4 is a structural diagram of an AC side conversion circuit in the single-stage three-port magnetic integrated topology according to another embodiment of the present disclosure.
FIG.5 is a structural diagram of a high-voltage side conversion circuit or a low-voltage side conversion circuit in the single-stage three-port magnetic integrated topology according to an embodiment of the present disclosure.
FIG. 6 is a structural diagram of a high-voltage side conversion circuit in the single-stage three-port magnetic integrated topology according to another embodiment of the present disclosure.
FIG. 7 is a structural diagram of a low-voltage side conversion circuit in the single-stage three-port magnetic integrated topology according to another embodiment of the present disclosure.
FIG. 8 is a flowchart of a control method for a vehicle-mounted charger according to an embodiment of the present disclosure.
FIG. 9 is a circuit diagram of the single-stage three-port magnetic integrated topology according to an embodiment of the present disclosure.
FIG. 10 is a waveform diagram of a driving signal for the single-stage three-port magnetic integrated topology when a grid voltage is positive according to an embodiment of the present disclosure.
FIG. 11 is a circuit diagram of the single-stage three-port magnetic integrated topology according to another embodiment of the present disclosure.

### DETAILED DESCRIPTION

The technical solutions according to the embodiments of the present disclosure will be described clearly and completely as follows in conjunction with the drawings in the embodiments of the present disclosure. It is apparent that the described embodiments are only some of the embodiments according to the present disclosure, rather than all the embodiments. Any other embodiments obtained by those skilled in the art based on the embodiments of the present disclosure without any creative work fall within the protection scope of the present disclosure.

The terms "include", "comprise" or any other variants thereof are intended to be non-exclusive. Therefore, a process, method, article or device including a series of elements include not only these elements but also other elements that are not clearly enumerated, or further include elements inherent in the process, method, article or device. Unless expressively limited, the statement "including a..." does not exclude the case that other similar elements may exist in the process, method, article or device including the series of elements.

The present application provides a single-stage three-port magnetic integrated topology, to reduce components, improve the conversion efficiency and simplify the control solution.

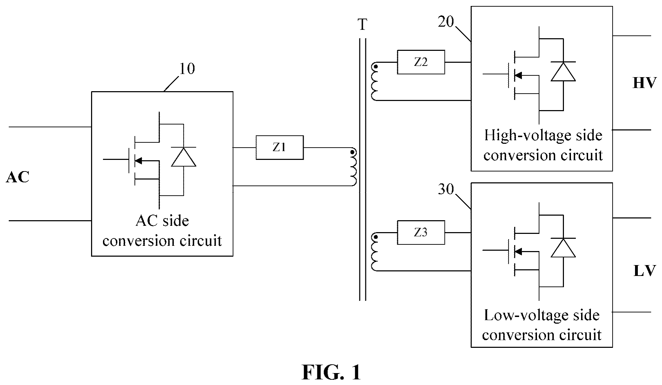

As shown in FIG. 1, a single-stage three-port magnetic integrated topology includes a transformer T, an alternating-current (AC) side conversion circuit 10, a high-voltage side conversion circuit 20 and a low-voltage side conversion circuit 30.

One side of the AC side conversion circuit 10 serves as an AC side of the single-stage three-port magnetic integrated topology AC, which is used to connect with a power grid, such as single-phase or three-phase power grids. The other side of the AC side conversion circuit 10 is connected with a primary winding of the transformer T directly or through a first impedance Z1.

An AC side of the high-voltage side conversion circuit 20 is connected with one secondary winding of the transformer T directly or through a second impedance Z2. A direct-current (DC) side of the high-voltage side conversion circuit 20 serves as a high-voltage DC side, HV, of the single-stage three-port magnetic integrated topology, which is used to connect with a high-voltage battery of an electric vehicle.

An AC side of the low-voltage side conversion circuit 30 is connected with another secondary winding of the transformer T directly or through a third impedance Z3. A DC side of the low-voltage side conversion circuit 30 serves as a low-voltage DC side, LV, of the single-stage three-port magnetic integrated topology, which is used to connect with a low-voltage battery and a low-voltage electrical device of the electric vehicle.

In an embodiment, the single-stage three-port magnetic integrated topology mainly includes: a grid-side matrix conversion circuit (the AC side conversion circuit 10), the first impedance Z1, the high-voltage side conversion circuit 20, the second impedance Z2, the low-voltage side conversion circuit 30, the third impedance Z3 and the three-port high-frequency transformer T. The AC, HV and LV are connected by means of the three-port high-frequency transformer T.

In an embodiment, the AC side conversion circuit 10 is a matrix conversion structure, which is used to achieve the voltage polarity conversion processing and power factor correction function for the AC side of the single-stage three-port magnetic integrated topology.

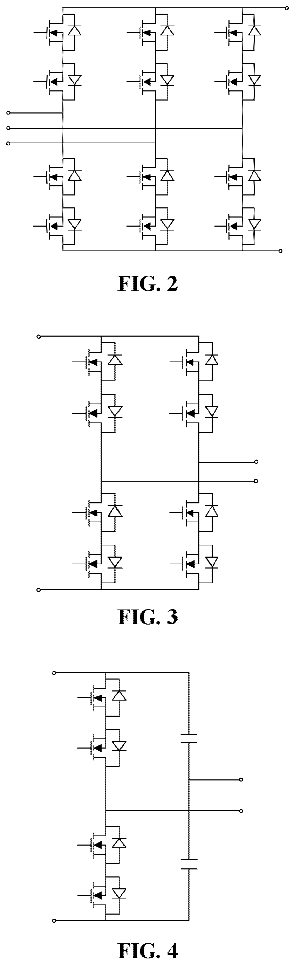

In practical application, the matrix conversion structure of the AC side conversion circuit 10 may be a three-phase structure (as shown in FIG. 2), a full bridge structure (as shown in FIG. 3) or a half bridge structure (as shown in FIG. 4). Regardless of the structure used, the matrix conversion structure is based on a controlled half bridge arm as a basic unit. The half bridge arm consists of four switching transistors that are connected in pairs in a back-to-back pattern to form two bidirectional switches in series. That is, each half bridge arm includes two bidirectional switches, and each bidirectional switch is composed of two corresponding switching transistors connected in series in reverse (i.e. back-to-back). Taking the full bridge structure shown in FIG. 3 as an example, two ends of the half bridge arms are connected to the power grid, and midpoints of the half bridge arms are used to connected to the impedance (i.e. Z1 in FIG. 1) and the transformer T network. In terms of control, an anode of a freewheeling diode of the bidirectional switch is directed towards the switching transistor at a high-voltage terminal of the half bridge arm, and a driving signal is a constant signal; and an anode of a freewheeling diode is directed towards the switching transistor at a low-voltage terminal of the half bridge arm, and a driving signal is a complementary high-frequency on-off signal with a duty ratio of 50%. In an embodiment, if the matrix conversion structure is the three-phase structure or the full bridge structure, a corresponding filter capacitor is provided between each two AC phases of the single-stage three-port magnetic integrated topology; and if the matrix conversion structure is the half bridge structure, the AC side conversion circuit 10 further includes two filter capacitors connected in series, a series connection point is connected with the primary winding, and two ends of the two filtering capacitors connected in series are connected in parallel with the half bridge arm to the AC side of the single-stage three-port magnetic integrated topology.

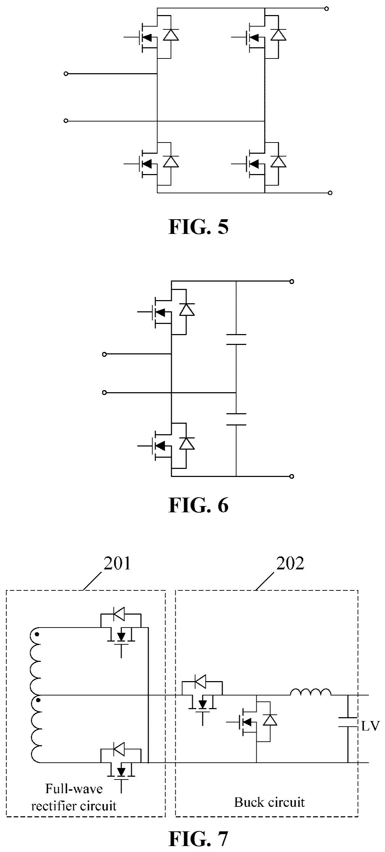

The high-voltage side conversion circuit 20 may be a full bridge circuit (as shown in FIG. 5) or a half bridge circuit (as shown in FIG. 6). The switching transistors of the half bridge arm of the high-voltage side conversion circuit 20 are complementarily switched on, a duty ratio is 50%, and a frequency is the same as that of the high-frequency switching transistor in the AC side conversion circuit 10. A midpoint of the bridge arm generates a positive and negative symmetrical square wave voltage.

The low-voltage side conversion circuit 30 may be a full bridge circuit as shown in FIG. 5. When the low-voltage side conversion circuit 30 is the full bridge circuit, the switching transistors of the half bridge arm are complementarily switched on, a duty ratio is 50%, and a frequency is the same as that of the high-frequency switching transistor in the AC side conversion circuit 10. A midpoint of the bridge arm generates a positive and negative symmetrical square wave voltage or a three-level voltage with zero voltage according to a voltage relationship between the high-voltage direct-current side HV and the low-voltage direct-current side LV.

Alternatively, as shown in FIG. 7, the low-voltage side conversion circuit 30 includes a full-wave rectifier circuit 201 and a buck circuit 202 connected in a cascade, and a secondary winding connected to the low-voltage side conversion circuit 30 is a winding with a center tap. When the low-voltage side conversion circuit 30 is the full-wave rectifier circuit 201 and the buck circuit 202 connected in a cascade in FIG. 7, the time for the full-wave rectifier switching transistors to turn on and off is in phase with that of the switching transistors in the high-voltage side conversion circuit 20. By changing the duty ratio of the switching transistors in the buck circuit 202, the output voltage of low-voltage DC side LV can be controlled.

The power transmission between the three ports of the single-stage three-port magnetic integrated topology is achieved by controlling the phase angle changes of the switching transistors in the AC side conversion circuit 10, the switching transistors in the high-voltage side conversion circuit 20, and the switching transistors in the low-voltage side conversion circuit 30.

In the single-stage three-port magnetic integrated topology according to embodiments of the present disclosure, the AC side conversion circuit 10 can replace the additional PFC rectification circuit in conventional technology to achieve the power factor correction function using a matrix conversion structure on the basis of implementing voltage polarity conversion processing on the AC side of the single-stage three-port magnetic integrated topology. Therefore, the PFC rectification circuit, a corresponding PFC inductor, and a large-capacitance electrolytic capacitor between positive and negative electrodes of an intermediate bus in the rear stage can be omitted, thereby reducing components and improving the power density. Furthermore, compared to conventional technology, the single-stage conversion structure, with the omission of the PFC rectification circuit, reduces one stage of power conversion, thereby improving the conversion efficiency and simplifying the control solution.

In practical application, the AC side AC, the high-voltage DC side HV and the low-voltage DC side LV of the single-stage three-port magnetic integrated topology may also be provided with corresponding filter circuits, depending on the specific application environment, which is not limited here.

In an embodiment, the switching transistors in the AC side conversion circuit 10 and the high-voltage side conversion circuit 20 may be a MOSFET (Metal-Oxide-Semiconductor Field-Effect Transistor) such as a SiC MOSFET, or may be an IGBT (Insulated Gate Bipolar Transistor) with an anti-parallel diode, or may be a GaN, and so on, which is not limited here. Moreover, the package of each device is not limited. The bidirectional switches in the AC side conversion circuit 10 may be an integrated modular package or a single-transistor connected package. The switching transistors in the low-voltage side conversion circuit 30 may be the MOSFET, which is not limited and depends on the specific application environment.

On the basis of the above embodiments, the single-stage three-port magnetic integrated topology according to this embodiment may be provided with multiple implementation forms for each impedance, such as: the impedance value of the first impedance Z1 is zero, or the first impedance Z1 may be at least one of an inductor and a capacitor; the impedance value of the second impedance Z2 is zero, or the second impedance Z2 may be at least one of the inductor and the capacitor; and the impedance value of the third impedance Z3 is zero, or the third impedance Z3 may be at least one of the inductor and capacitor. Namely, the impedances Z1, Z2 and Z3 may be: a combination of the inductor and the capacitor, one of the inductor and the capacitor, or none of the inductor and the capacitor (i.e. short circuit, the impedance value is zero).

In an embodiment, at a switching frequency of the single-stage three-port magnetic integrated topology, the impedance value of the second impedance Z2 is less than that of the first impedance Z1 and that of the third impedance Z3, and a difference between each of the impedance value of the first impedance Z1 and the impedance value of the third impedance Z3 and that of the second impedance Z2 is greater than a preset threshold. Namely, the impedance value of the second impedance Z2 is much less than that of the first impedance Z1 and that of the third impedance Z3.

For instance, the second impedance Z2 may short-circuit directly, and the impedance value is zero. Alternatively, the second impedance Z2 may also be a capacitor a capacity greater than a preset capacity, i.e. a blocking capacitor with a large capacity, playing a role in blocking direct current. The voltage at the two ends of the second impedance Z2 is small, and the change is small, which can be considered as a short circuit. When at least one of the first impedance Z1 and the third impedance Z3 is the inductor, the inductor may be a single inductor, or an integrated inductor or a leakage inductor of the transformer T.

When the second impedance Z2 is relatively small, the port voltage of the corresponding secondary winding of the transformer T can be approximately considered as the AC side voltage of the high-voltage side conversion circuit 20, that is, the midpoint voltage of the bridge arm. Therefore, when the midpoint voltage of the bridge arm of the high-voltage side conversion circuit 20 is a positive and negative symmetrical square wave voltage, the port voltage waveform of other windings of the transformer T is also a positive and negative symmetrical square wave voltage, and the proportion between the midpoint voltage amplitude of the bridge arm and the port voltage amplitude of the secondary winding connected with the high-voltage side conversion circuit 20 is the turns ratio of the corresponding windings.

The single-stage three-port magnetic integrated topology according to the embodiments of the present disclosure not only enables three-port power transmission through a single-stage structure, but also achieves voltage clamping of the winding of the transformer T through the low-impedance design on the high-voltage side, thereby realizing the power decoupling between different ports and simplifying the control.

A vehicle-mounted charger is further provided according to another embodiment of the present disclosure. The vehicle-mounted charger includes a controller and a single-stage three-port magnetic integrated topology as described in any one of the above embodiments, and the single-stage three-port magnetic integrated topology is controlled by the controller.

The structure and principle of the single-stage three-port magnetic integrated topology may be referred to the above embodiments, which will not be described here. The specific structure and functions of the controller may be referred to conventional technology, which will not be described here.

In the vehicle-mounted charger according to embodiments of the present disclosure, by adopting the single-stage three-port magnetic integrated topology and implementing the AC side conversion circuit 10 with a matrix conversion structure, it is possible to achieve the AC voltage polarity conversion processing and the power factor correction function. Moreover, by means of a low-impedance design on a high-voltage side of the single-stage three-port magnetic integrated topology, a high-voltage side conversion circuit 20 can be controlled to implement transformer T port voltage clamping, thereby achieving port power decoupling and reducing control complexity.

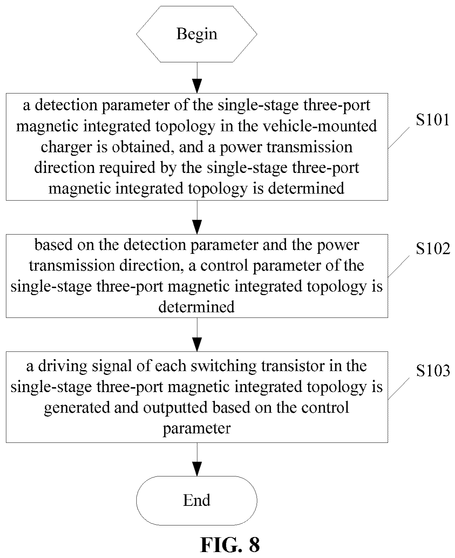

A control method for the vehicle-mounted charger is further provided according to another embodiment of the present disclosure. The control method is applied to the controller of the vehicle-mounted charger as described in the above embodiment. As shown in FIG. 8, the control method includes the following steps.

In S101, a detection parameter of the single-stage three-port magnetic integrated topology in the vehicle-mounted charger is obtained, and a power transmission direction required by the single-stage three-port magnetic integrated topology is determined.

According to FIG. 1, the single-stage three-port magnetic integrated topology can achieve the charging power transmission from the AC side AC to the high-voltage DC side HV and the low-voltage DC side LV, the charging power transmission from the AC side AC to the high-voltage DC side HV or the low-voltage DC side LV, the charging power transmission from the high-voltage DC side HV to the AC side AC and the low-voltage DC side LV, the charging power transmission from the high-voltage DC side HV to the AC side AC or the low-voltage DC side LV, and the charging power transmission from the low-voltage DC side LV to the high-voltage DC side HV, which depends on specific application environment and falls within the scope of the present disclosure.

The vehicle-mounted charger may specifically perform electrical parameter detection, such as voltage detection, on corresponding port after receiving a charging and discharging instruction. Meanwhile, the required power transmission direction can be determined according to the charging and discharging instruction.

In S102, based on the detection parameter and the power transmission direction, a control parameter of the single-stage three-port magnetic integrated topology is determined.

The detection parameter includes an external phase shift angle and a switching frequency.

When the single-stage three-port magnetic integrated topology includes the AC side conversion circuit 10, the high-voltage side conversion circuit 20 and the low-voltage side conversion circuit 30 as shown in FIG. 1, the external phase shift angle includes: a first angle phase difference between the AC side conversion circuit 10 and the high-voltage side conversion circuit 20 in a driving signal; a second angle phase difference between the AC side conversion circuit 10 and the low-voltage side conversion circuit 30 in the driving signal; and a third angle phase difference between the high-voltage side conversion circuit 20 and the low-voltage side conversion circuit 30 in the driving signal.

Specifically, when a power is transmitted from the AC side AC of the single-stage three-port magnetic integrated topology to the high-voltage DC side HV of the single-stage three-port magnetic integrated topology and the low-voltage DC side LV of the single-stage three-port magnetic integrated topology, each of the first angle phase difference and the second angle phase difference is greater than zero; when the power is transmitted from the high-voltage DC side HV of the single-stage three-port magnetic integrated topology to the low-voltage DC side LV of the single-stage three-port magnetic integrated topology, the third angle phase difference is greater than zero and a driving signal of the AC side matrix conversion circuit is turned off; when the power is transmitted from the high-voltage DC HV side of the single-stage three-port magnetic integrated topology to the AC side AC of the single-stage three-port magnetic integrated topology and the low-voltage DC side LV of the single-stage three-port magnetic integrated topology, the first angle phase difference is less than zero and the third angle phase difference is greater than zero; and when the power is transmitted from the low-voltage DC side LV of the single-stage three-port magnetic integrated topology to the high-voltage DC side HV of the single-stage three-port magnetic integrated topology, the third angle phase difference is less than zero and the driving signal of the AC side matrix conversion circuit is turned off.

Moreover, the switching frequency of the AC side conversion circuit 10, the switching frequency of the high-voltage side conversion circuit 20 and the switching frequency of the low-voltage side conversion circuit 30 are the same, and the duty ratio of each of the three can be 50%, but it is not limited to this. In addition, when the low-voltage side conversion circuit 30 is the full-wave rectifier circuit 201 and the buck circuit 202 connected in a cascade as shown in FIG. 7, the duty ratio of the switching transistors in the buck circuit 202 is adjustable, thereby controlling the output voltage of low-voltage DC side LV.

In an embodiment, when the low-voltage side conversion circuit in the single-stage three-port magnetic integrated topology is the full bridge circuit, the control parameter further includes an internal phase shift angle of the low-voltage side conversion circuit.

Moreover, there is no internal phase shift angle in the high-voltage side conversion circuit, in which the AC side outputs a positive and negative symmetrical square wave voltage.

In S103, a driving signal of each switching transistor in the single-stage three-port magnetic integrated topology is generated and outputted based on the control parameter.

According to the control parameter, the corresponding PWM (Pulse Width Modulation) algorithm can be used to generated the driving signals of each circuit, which will not be described here.

In practical application, in each half bridge arm of the AC side conversion circuit in the single-stage three-port magnetic integrated topology, an anode of a freewheeling diode is directed towards a switch transistor at a high-voltage terminal of the AC side of the single-stage three-port magnetic integrated topology, and a corresponding driving signal is a constant signal; and an anode of the freewheeling diode is directed towards a switch transistor at a low-voltage terminal of the alternating-current side of the single-stage three-port magnetic integrated topology, and a corresponding driving signal is a complementary high-frequency on-off signal with a duty ratio of 50%.

The switching transistors of the half bridge arm of the high-voltage side conversion circuit are complementarily switched on, a duty ratio is 50%, and a frequency is the same as that of the high-frequency switching transistor in the AC side conversion circuit. A midpoint of the bridge arm generates a positive and negative symmetrical square wave voltage.

When the low-voltage side conversion circuit is the full bridge circuit, the switching transistors of the half bridge arm are complementarily switched on, a duty ratio is 50%, and a frequency is the same as that of the high-frequency switching transistor in the AC side conversion circuit. A midpoint of the bridge arm generates a positive and negative symmetrical square wave voltage or a three-level voltage with zero voltage according to a voltage relationship between the high-voltage direct-current side and the low-voltage direct-current side. When the low-voltage side conversion circuit is the full-wave rectifier circuit and the buck circuit connected in a cascade, the time for the full-wave rectifier switching transistors to turn on and off is in phase with that of the switching transistors in the high-voltage side conversion circuit. By changing the duty ratio of the switching transistors in the buck circuit, the output voltage of low-voltage DC side can be controlled.

By changing the phase angle of the switching transistors in three types of circuits, the power transmission between the three ports of the single-stage three-port magnetic integrated topology can be achieved.

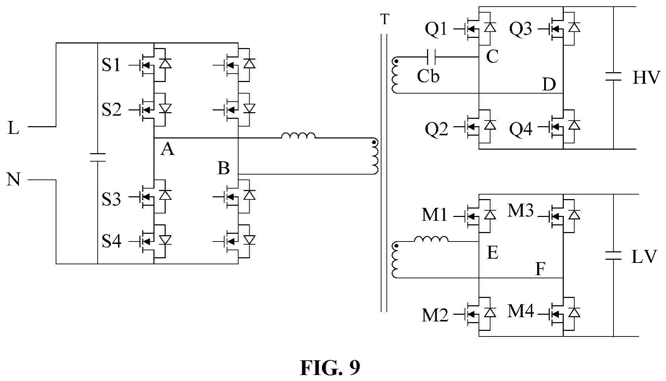

Taking the single-stage three-port charger topology of the single-phase power grid as an example as shown in FIG. 9, a detailed explanation of the driving logic is given below. Referring to FIG. 9, the AC side is connected to the single-phase power. The AC side conversion circuit is the full bridge structure. In one half bridge arm, switching transistors S1 and S2 are connected back-to-back to form one bidirectional switch, and switching transistors S3 and S4 are connected back-to-back to form the other one bidirectional switch. The structure of the other half bridge arm is the same. The high-voltage side conversion circuit is the full bridge structure, one half bridge arm of which includes the switching transistors Q1 and Q2, and the other one includes the switching transistors Q3 and Q4. The low-voltage side conversion circuit is the full bridge structure, one half bridge arm of which includes the switching transistors M1 and M2, and the other one includes the switching transistors M3 and M4. The first impedance Z1 and the third impedance Z3 are single inductors, or integrated inductors or leakage inductors of the transformer T. The second impedance Z2 is a capacitor with a large capacitance value, which acts as a DC barrier. The voltage at both ends of the second impedance Z2 is relatively small and does not change much, so it can be considered as a short circuit during analysis.

When the grid voltage LN is positive, the anodes of the freewheeling diodes of the switching transistors S2 and S4 point to L terminal, so the switching transistors S2 and S4 are always switched on. The anodes of the freewheeling diodes of the switching transistors S1 and S3 point to N terminal, so the switching transistors S1 and S3 are switched on and off at a high-frequency manner. When the grid voltage LN is negative, the switching transistors S2 and S4 are switched on and off at a high-frequency manner, and the switching transistors S1 and S3 are always switched on.

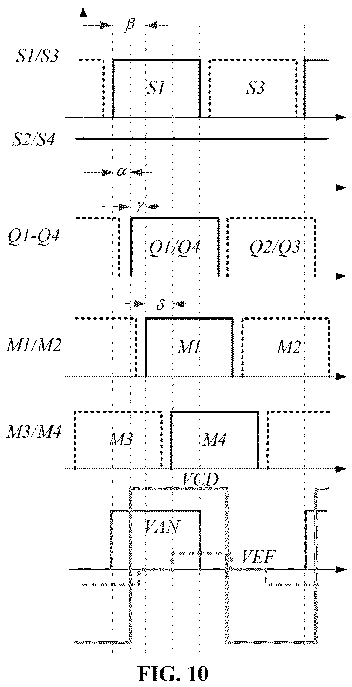

When the grid voltage LN is positive, there is an angle phase difference α between the driving signals of the switching transistors S1 and Q1 (i.e. the first angle phase difference described above); there is an angle phase difference β between the driving signals of the switching transistors S1 and M1 (i.e. the second angle phase difference described above); there is an angle phase difference γ between the driving signals of the switching transistors Q1 and M1 (i.e. the third angle phase difference described above); and the driving signal of the switching transistor M1 is ahead of an angle δ of the driving signal of the switching transistor M4 (i.e. the internal phase shift angle described above). By adjusting the angle of α, β and γ, the energy control between the three ports of the single-stage three-port magnetic integrated topology can be achieved. Meanwhile, by adjusting the angle of δ, the effective current in the windings of the transformer T can be reduced under the same power transmission condition, reducing the conduction loss between the transformer T and the power transistor, thereby improving the efficiency of the charger. When the grid voltage LN is positive, the corresponding driving signal logic is shown in FIG. 10. VCD is the midpoint voltage of the bridge arm of the high-voltage side conversion circuit (i.e. the voltage between C and D on alternating-current side as shown in FIG. 9), VEF is the midpoint voltage of the bridge arm of the low-voltage side conversion circuit (i.e. the voltage between E and F on alternating-current side as shown in FIG. 9), and VAN is the voltage difference between the midpoint of the corresponding half bridge arm (the midpoint A of the half bridge arm where the switching transistors S1 to S4 are provided, as shown in FIG. 9) and N on AC side in the AC side conversion circuit.

It can be concluded that the midpoint voltage VCD of the bridge arm of the high-voltage side conversion circuit is ± voltage of the high-voltage DC side HV. In the case of a low impedance of the second impedance Z2, the port voltage of the corresponding secondary winding of the transformer T connected with the high-voltage side conversion circuit is approximately the midpoint voltage of the bridge arm of the high-voltage side conversion circuit. Thus, the port voltage waveform of other windings of the transformer T is also a positive and negative symmetrical square wave voltage, where the proportion between the port voltage amplitude of other windings and the secondary winding of the transformer T connected with the high-voltage side conversion circuit is the turns ratio of the corresponding windings. By controlling the angles of the corresponding driving signals, the corresponding square wave voltage is converted into the port voltage, thereby implementing the control of power size and direction.

Moreover, when the grid voltage LN is negative, the switching transistors S2 and S4 are switched on and off at a high-frequency manner. There is an angle phase difference α between the driving signals of the switching transistors S4 and Q1 (i.e. the first angle phase difference described above), there is an angle phase difference β between the driving signals of the switching transistors S4 and M1 (i.e. the second angle phase difference described above), and the switching transistors S1 and S3 are always switched on. The driving logic is similar to that when the grid voltage LN is positive, which will not be described here.

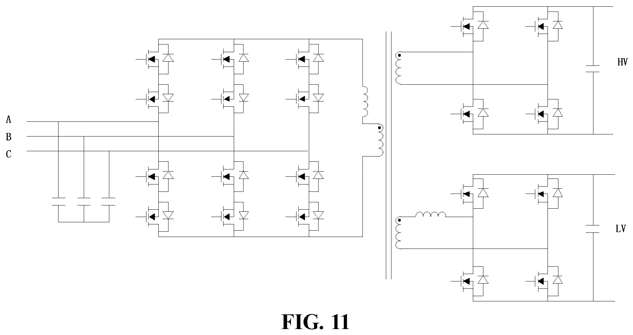

FIG. 11 shows a three-phase power grid single-stage three-port charger topology, the driving logic of which can be analogized, so it will not be described here. Meanwhile, the driving logics of other optional circuit structures will not be detailed here. By controlling the phase angles of the power devices between different ports, the control of power size and direction can be implemented, thereby reducing the control complexity.

The same or similar parts among the embodiments in this specification may be referred to each other, and each of the embodiments emphasizes differences from other embodiments. In particular, the system or system embodiment is basically similar to the method embodiment, and therefore is described relatively briefly. For relevant details, reference can be made to the corresponding description of the method embodiment. The system and system embodiments described above are only illustrative, in which the units described as separate components may or may not be physically separated, and the components shown as units may or may not be physical units, that is, may be located in one place, or distributed over multiple network elements. Some or all of the modules may be selected as needed to achieve the purpose of the solution of the embodiments. Those skilled in the art can understand and implement the solution without any creative effort.

Those skilled in the art may further realize that the units and algorithm steps of each example described in conjunction with the embodiments disclosed herein can be implemented by electronic hardware, computer software, or a combination of both. In order to clearly illustrate the interchangeability of hardware and software, the modules and steps of each example have been described in general terms of functionality in the above description. Whether these functions are performed in hardware or software depends on the specific application and design constraints of the technical solution. Those skilled in the art may implement the described functionality in various manners for each specific application, while such implementations should not be considered to be beyond the scope of the present disclosure.

Based on the above description of the disclosed embodiments, the features described in the different embodiments in this specification may be replaced or combined with each other, so that those skilled in the art can implement or use the present disclosure. Various modifications to these embodiments will be apparent by those skilled in the art, and the generic principles defined herein may be implemented in other embodiments without departing from the spirit or scope of the present disclosure. Therefore, the present disclosure is not limited to the embodiments described herein, but should be in accordance with the broadest scope consistent with the principle and novel features disclosed herein.

## Claims

1. A single-stage three-port magnetic integrated topology, comprising a transformer, an AC side conversion circuit, a high-voltage side conversion circuit and a low-voltage side conversion circuit; wherein
one side of the AC side conversion circuit servers as an AC side of the single-stage three-port magnetic integrated topology;
the other side of the AC side conversion circuit is connected with a primary winding of the transformer;
an AC side of the high-voltage side conversion circuit is connected with one secondary winding of the transformer;
a DC side of the high-voltage side conversion circuit serves as a high-voltage DC side of the single-stage three-port magnetic integrated topology;
an AC side of the low-voltage side conversion circuit is connected with another secondary winding of the transformer;
a DC side of the low-voltage side conversion circuit serves as a low-voltage DC side of the single-stage three-port magnetic integrated topology; and
the AC side conversion circuit is a matrix conversion structure, to perform voltage polarity conversion and power factor correction for the AC side of the single-stage three-port magnetic integrated topology.

2. The single-stage three-port magnetic integrated topology according to claim 1, wherein the matrix conversion structure is a three-phase structure, a full bridge structure, or a half bridge structure.

3. The single-stage three-port magnetic integrated topology according to claim 2, wherein a controlled half bridge arm in the AC side conversion circuit comprises two bidirectional switches connected in series, and each of the two bidirectional switches comprises two switching transistors connected in series in reverse;
wherein when the matrix conversion structure is the three-phase structure or the full bridge structure, a corresponding filter capacitor is provided between each two AC phases of the single-stage three-port magnetic integrated topology; and
wherein when the matrix conversion structure is the half bridge structure, the AC side conversion circuit further comprises two filter capacitors connected in series, a series connection point is connected with the primary winding, and two ends of the two filtering capacitors connected in series are connected in parallel with the half bridge arm to the AC side of the single-stage three-port magnetic integrated topology.

4. The single-stage three-port magnetic integrated topology according to claim 1, wherein the high-voltage side conversion circuit is a full bridge circuit or a half bridge circuit.

5. The single-stage three-port magnetic integrated topology according to claim 1, wherein the low-voltage side conversion circuit is a full bridge circuit, or a full-wave rectifier circuit and a buck circuit connected in a cascade.

6. The single-stage three-port magnetic integrated topology according to any one of claims 1 to 5, further comprising a first impedance, a second impedance and a third impedance;
wherein the first impedance and the primary winding are connected in series to a corresponding side of the AC side conversion circuit;
wherein the second impedance and a corresponding secondary winding are connected in series to the AC side of the high-voltage side conversion circuit; and
wherein the third impedance and a corresponding secondary winding are connected in series to the AC side of the low-voltage side conversion circuit.

7. The single-stage three-port magnetic integrated topology according to claim 6, wherein at a switching frequency of the single-stage three-port magnetic integrated topology, an impedance value of the second impedance is less than each of an impedance value of the first impedance and an impedance value of the third impedance, a difference between the impedance value of the first impedance and the impedance value of the second impedance is greater than a preset threshold, and/or a difference between the impedance value of the third impedance and the impedance value of the second impedance is greater than the preset threshold.

8. The single-stage three-port magnetic integrated topology according to claim 6,
wherein the impedance value of the first impedance is zero, or the first impedance is at least one of an inductor and a capacitor;
wherein the impedance value of the second impedance is zero, or the second impedance is at least one of the inductor and the capacitor; and
wherein the impedance value of the third impedance is zero, or the third impedance is at least one of the inductor and the capacitor.

9. The single-stage three-port magnetic integrated topology according to claim 8, wherein the impedance value of the second impedance is zero, or the second impedance is a capacitor with a capacity greater than a preset capacity.

10. The single-stage three-port magnetic integrated topology according to claim 8, wherein inductors of the first impedance and the third impedance are either single inductors, or integrated inductors or leakage inductors of the transformer.

11. A vehicle-mounted charger, comprising a controller, and a single-stage three-port magnetic integrated topology according to any one of claims 1 to 10;
wherein the single-stage three-port magnetic integrated topology is controlled by the controller.

12. A control method for a vehicle-mounted charger, applied to the controller of the vehicle-mounted charger according to claim 11, wherein control method comprises:
obtaining a detection parameter of the single-stage three-port magnetic integrated topology in the vehicle-mounted charger, and determining a power transmission direction required by the single-stage three-port magnetic integrated topology;
determining, based on the detection parameter and the power transmission direction, a control parameter of the single-stage three-port magnetic integrated topology, wherein the control parameter comprises an external phase shift angle and a switching frequency; and
generating and outputting, based on the control parameter, a driving signal of each switching transistor in the single-stage three-port magnetic integrated topology.

13. The control method for the vehicle-mounted charger according to claim 12, wherein the external phase shift angle comprises the followings in the single-stage three-port magnetic integrated topology:
a first angle phase difference between the AC side conversion circuit and the high-voltage side conversion circuit in a driving signal;
a second angle phase difference between the AC side conversion circuit and the low-voltage side conversion circuit in the driving signal; and
a third angle phase difference between the high-voltage side conversion circuit and the low-voltage side conversion circuit in the driving signal.

14. The control method for the vehicle-mounted charger according to claim 13,
wherein when a power is transmitted from the AC side of the single-stage three-port magnetic integrated topology to the high-voltage DC side of the single-stage three-port magnetic integrated topology and the low-voltage DC side of the single-stage three-port magnetic integrated topology, each of the first angle phase difference and the second angle phase difference is greater than zero;
wherein when the power is transmitted from the high-voltage DC side of the single-stage three-port magnetic integrated topology to the low-voltage DC side of the single-stage three-port magnetic integrated topology, the third angle phase difference is greater than zero and a driving signal of the AC side matrix conversion circuit is turned off;
wherein when the power is transmitted from the high-voltage DC side of the single-stage three-port magnetic integrated topology to the AC side of the single-stage three-port magnetic integrated topology and the low-voltage DC side of the single-stage three-port magnetic integrated topology, the first angle phase difference is less than zero and the third angle phase difference is greater than zero; and
wherein when the power is transmitted from the low-voltage DC side of the single-stage three-port magnetic integrated topology to the high-voltage DC side of the single-stage three-port magnetic integrated topology, the third angle phase difference is less than zero and the driving signal of the AC side matrix conversion circuit is turned off.

15. The control method for the vehicle-mounted charger according to claim 12, wherein when the low-voltage side conversion circuit in the single-stage three-port magnetic integrated topology is a full bridge circuit, the control parameter further comprise an internal phase shift angle of the low-voltage side conversion circuit.

16. The control method for the vehicle-mounted charger according to claim 12, wherein the high-voltage side conversion circuit is provided without the internal phase shift angle.

17. The control method for the vehicle-mounted charger according to any one of claims 12 to 16, wherein for each half bridge arm of the AC side conversion circuit in the single-stage three-port magnetic integrated topology,
an anode of a freewheeling diode is directed towards a switching transistor at a high-voltage terminal of the AC side of the single-stage three-port magnetic integrated topology, and a corresponding driving signal is a constant signal; and
an anode of the freewheeling diode is directed towards a switching transistor at a low-voltage terminal of the alternating-current side of the single-stage three-port magnetic integrated topology, and a corresponding driving signal is a complementary high-frequency on-off signal.
